# EUROPEAN PATENT SPECIFICATION

(11) **EP 3 981 677 B1**
(45) Date of publication and mention of the grant of the patent: **04.10.2023**
(21) Application number: 20835070.2
(22) Date of filing: 01.07.2020
(51) Int. Cl.: B62J 15/00, B62K 5/05, B62K 5/10, B62J 6/04, B62J 6/20, B62J 25/00, B62J 50/26

(54) **LEANING VEHICLE**
NEIGEFAHRZEUG
VÉHICULE INCLINABLE

(30) Priority: 01.07.2019 JP 2019123219
(43) Date of publication of application: 13.04.2022
(73) Proprietor: Yamaha Hatsudoki Kabushiki Kaisha, Iwata-shi, Shizuoka 438-8501 (JP)
(72) Inventor: KURAKAKE Haruhito, Iwata-shi, Shizuoka 438-8501 (JP); UCHIYAMA Katsuhiro, Iwata-shi, Shizuoka 438-8501 (JP)
(74) Representative: Zimmermann, Tankred Klaus
(86) International application number: PCT/JP2020/025855
(87) International publication number: WO 2021/002391

(56) References cited:
- WO-A1-2018/216727
- WO-A1-2019/098284
- WO-A1-2019/123092
- CN-A- 106 394 763
- CN-U- 207 889 908
- JP-U- S58 135 384
- US-A1- 2004 238 242
- US-A1- 2007 176 384
- US-A1- 2016 297 493

## Description

### TECHNICAL FIELD

The present teaching relates to a leaning vehicle.

### BACKGROUND ART

There has been known a standing-type leaning vehicle in which a driver places the left foot on a left foot step and the right foot on a right foot step. As such, a leaning vehicle, Non-patent Document 1, for example, discloses a motorcycle with a license plate, a taillight and direction signals provided at the center of a rear portion of the vehicle.

In the motorcycle of Non-patent Document 1, the left foot step and the right foot step are individually located between a front wheel and a rear wheel in the front-rear direction of the motorcycle and fixed to a vehicle body frame.

In the motorcycle of Non-patent Document 1, the license plate, the taillight and the direction signals are attached to a frame extending upward from a rear frame. Thus, the license plate, the taillight and the direction signals are located further upward than an axle of the rear wheel.

Patent Document 1 discloses a vehicle including a vehicle body frame, a left front wheel, a right front wheel, and a linkage mechanism located further upward than the left front wheel and the right front wheel and configured to shift positions of the left front wheel and the right front wheel relative to the vehicle body frame so that the vehicle body frame leans to the left or to the right of the vehicle. The linkage mechanism includes an upper cross member and a lower cross member extending in the left-right direction, a right side member rotatably supporting right ends of the upper cross member and the lower cross member, and a left side member rotatably supporting left ends of the upper cross member and the lower cross member. An intermediate portion of each of the upper cross member and the lower cross member is supported by the vehicle body frame in front of a steering shaft.

The upper cross member and the lower cross member are supported by the vehicle body frame such that the upper and lower cross members are rotatable about axes extending substantially in the front-rear direction of the vehicle body frame. The upper and lower cross members rotate with respect to the vehicle body frame by interlocking with leaning of the vehicle body frame, which causes shift in relative positions of the two front wheels in the top-bottom direction of the vehicle body frame. The upper and lower cross members are provided further upward than the two front wheels in the top-bottom direction of the vehicle body frame in a state where the vehicle body frame is upright.

The vehicle disclosed in Patent Document 1 includes a load transfer mechanism configured to include a left-foot-placing face on which the left foot of a driver of the vehicle is placed and a right-foot-placing face on which the right foot of the driver is placed, and configured such that a load is allowed to be transferred to a left portion of the linkage mechanism through one of the left-foot-placing face or the right-foot-placing face and that a load is allowed to be transferred to a right portion of the linkage mechanism through the other of the left-foot-placing face or the right-foot-placing face. The vehicle disclosed in Patent Document 2 is a three-wheel straddle-type vehicle having two front wheel, in which each front wheel is mounted to the frame via the front suspension assembly. The patent document 1: WO2018216727 discloses a leaning vehicle in accordance with the preamble of claim 1.

### CITATION LIST

### PATENT DOCUMENT

Patent Document 1: International Patent Application Publication No. 2018/216727
Patent Document 2: United State Patent Application Publication No. 2016/297493

### NON-PATENT DOCUMENT

Non-patent Document 1: "glafit [press release]," glafit inc. [searched on June 12, 2020], Internet (https://glafit.com/news/pr20200528)

### SUMMARY OF INVENTION

### TECHNICAL PROBLEM

In the vehicle disclosed in Patent Document 1, the driver starts driving the vehicle with the left foot placed on a left-foot-placing part (left foot step) and the right foot placed on a right-foot-placing part (right foot step).

Therefore, there is a demand for a configuration that allows for easy placement of the left foot on the left foot step and easy placement of the right foot on the right foot step in a vehicle including a left front wheel and a right front wheel.

It is therefore an object of the present teaching to obtain a configuration that allows for easy placement of the left foot on a left foot step and easy placement of the right foot on a right foot step in a leaning vehicle including a left front wheel and a right front wheel.

### SOLUTION TO PROBLEM

The inventors of the present teaching studied a configuration that allows the left foot to be easily placed on a left foot step and the right foot to be easily placed on a right foot step in a leaning vehicle including a left front wheel and a right front wheel.

Through an intensive study, the inventors of the present teaching arrived at the configuration as described below.

A leaning vehicle according to one embodiment of the present teaching is configured to lean leftward when turning to the left and lean rightward when turning to the right and includes: a vehicle body frame; a left front wheel located at the left of the vehicle body frame in a left-right direction of the vehicle body frame; a right front wheel located at the right of the vehicle body frame in the left-right direction of the vehicle body frame; a rear wheel located between the left front wheel and the right front wheel when the vehicle body frame is seen in a front-rear direction, and located further rearward than the left front wheel and the right front wheel in the front-rear direction of the vehicle body frame; a linkage mechanism supported by a front portion of the vehicle body frame and allowing the vehicle body frame to lean leftward or rightward in the left-right direction of the vehicle body frame; a left foot step including a left-foot-placing face on which a left foot of a driver is placed, at least a part of the left foot step being located rearward of the left front wheel; and a right foot step including a right-foot-placing face on which a right foot of the driver is placed, at least a part of the right foot step being located rearward of the right front wheel. The leaning vehicle further includes rear equipment which is supported by a rear portion of the vehicle body frame and does not include a rear fender covering at least a part of an upper portion of the rear wheel. The rear equipment is located such that a distance in a front-rear direction from a rear end of the left foot step to a front end of the rear equipment is greater than a half of a length of the left foot step in the front-rear direction, and a distance in the front-rear direction from a rear end of the right foot step to the front end of the rear equipment is greater than a half of a length of the right foot step in the front-rear direction. The rear equipment is located such that a height of an upper end of the rear equipment in a top-bottom direction from the left-foot-placing face of the left foot step is less than a height of the left-foot-placing face of the left foot step in the top-bottom direction from a ground surface, and a height of the upper end of the rear equipment in the top-bottom direction from the right-foot-placing-face of the right foot step is less than a height of the right-foot-placing face of the right foot step in the top-bottom direction from the ground surface. The rear equipment is located between a center in a left-right direction of the left foot step and a center in the left-right direction of the right foot step when the leaning vehicle is seen from the rear.

When a driver rides on the leaning vehicle, the driver rides on the leaning vehicle from the rear. When the driver rides on the leaning vehicle from the rear, the driver needs to place the feet at a left position and a right position of the rear wheel of the leaning vehicle. Thus, it is necessary to secure spaces which allow the driver's feet to be placed therein at the left position and the right position of the rear wheel of the leaning vehicle.

In the above-described configuration, therefore, the rear equipment is located at a position apart in the front-rear direction from the left foot step and the right foot step, and located between the center in the left-right direction of the left foot step and the center in the left-right direction of the right foot step when the leaning vehicle is seen from the rear. Accordingly, the spaces for the driver's feet to be placed therein can be secured at the left and the right of the rear wheel.

The height of the upper end of the rear equipment in the top-bottom direction from the left-foot-placing face of the left foot step is less than the height of the left-foot-placing face of the left foot step in the top-bottom direction from the ground surface, and the height of the upper end of the rear equipment in the top-bottom direction from the right-foot-placing-face of the right foot step is less than the height of the right-foot-placing face of the right foot step in the top-bottom direction from the ground surface. This can prevent the rear equipment from hampering the driver when the driver rides on the leaning vehicle.

Therefore, it is possible to obtain a configuration that allows for easy placement of the left foot on the left foot step and easy placement of the right foot on the right foot step in the leaning vehicle including the left front wheel and the right front wheel.

The rear equipment refers to, for example, components provided in a rear portion of the leaning vehicle, such as a license-plate-supporting bracket supporting a license plate, a reflector or a lighting device.

In another aspect, the leaning vehicle preferably includes the following configuration. The leaning vehicle further includes a rear-member-supporting part supporting at least one of the rear fender or the rear equipment to the vehicle body frame.

Accordingly, at least one of the rear fender or the rear equipment can be supported to the vehicle body frame. Thus, a configuration with the rear fender and the rear equipment disposed in the rear portion of the leaning vehicle can be easily achieved.

In another aspect, the leaning vehicle preferably includes the following configuration. The upper end of the rear equipment is lower than an upper end of the rear fender.

This can prevent the rear equipment from having contact with the driver's foot and thereby hampering the driver when the driver rides on the leaning vehicle.

In another aspect, the leaning vehicle preferably includes the following configuration. The rear equipment includes at least one of a license-plate-supporting bracket supporting a license plate, a reflector or a lighting device.

Accordingly, it is possible to obtain a configuration that allows the left foot to be easily placed on the left foot step and the right foot to be easily placed on the right foot step in the leaning vehicle where the license-plate-supporting bracket supporting the license plate, the reflector and the direction signal are disposed in the rear portion of the vehicle.

In another aspect, not claimed in the invention, the leaning vehicle preferably includes the following configuration. The leaning vehicle further includes a lean suppressing mechanism switchable between an active state and an inactive state, configured to suppress leftward or rightward leaning of the linkage mechanism in the active state and not to suppress leftward or rightward leaning of the linkage mechanism in the inactive state. Accordingly, the driver can ride on the leaning vehicle in a state where the lean suppressing mechanism is in the active state, that is, leaning of the linkage mechanism is suppressed by the lean suppressing mechanism.

The terminology used herein is for the purpose of describing particular embodiments only and is not intended to be limiting of the invention.

As used herein, the term "and/or" includes any and all combinations of one or more of the associated listed items.

It will be further understood that the terms "including," "comprising" or "having" and variations thereof when used in this specification, specify the presence of stated features, steps, elements, components, and/or their equivalents but do not preclude the presence or addition of one or more steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include connections or couplings, whether direct or indirect.

An embodiment of a leaning vehicle according to the present teaching will be herein described.

In the following description, numerous specific details are set forth in order to provide a thorough understanding of the present invention. It will be evident, however, to one skilled in the art that the present invention may be practiced without these specific details.

The present disclosure is to be considered as an exemplification of the invention, and is not intended to limit the invention to the specific embodiments illustrated by the figures or description below.

### [Leaning Vehicle]

A leaning vehicle herein is a vehicle that turns in a leaning posture. Specifically, the leaning vehicle is a vehicle that leans leftward when turning to the left and leans rightward when turning to the right. The leaning vehicle may be a single-passenger vehicle or a vehicle on which a plurality of passengers can ride.

### [Distance in Front-Rear Direction from Rear End of Foot Step to Front End of Rear Equipment]

A distance in a front-rear direction from a rear end of a foot step to a front end of rear equipment herein refers to a distance, in a front-rear direction of the leaning vehicle, from a rear end in the front-rear direction of a left foot step to the front end of the rear equipment, or a distance from a rear end in the front-rear direction of a right foot step to the front end of the rear equipment. The distance in the front-rear direction from the rear end of each of the foot steps to the front end of the rear equipment is a distance which can secure a space for a foot of a driver to be placed therein when the driver rides on the leaning vehicle. In a case where the rear equipment includes a plurality of components, the front end of the rear equipment means a front end of a component located in the forefront of these components.

### [Height of Upper End of Rear Equipment in Top-Bottom Direction from Foot Placing Face of Foot Step]

A height of an upper end of the rear equipment in a top-bottom direction from a foot placing face of the foot step herein refers to a distance from a left-foot-placing face of the left foot step to the upper end of the rear equipment, or a distance from a right-foot-placing face of the right foot step to the upper end of the rear equipment, in a top-bottom direction of the leaning vehicle. The upper end of the rear equipment refers to an upper end of a portion, in the rear equipment, located under an area which the driver's foot passes across when the driver rides on the leaning vehicle. In a case where the rear equipment includes a plurality of components, the upper end of the rear equipment refers to the highest end of portions, in the rear equipment, located under an area which the driver's foot passes across when the driver rides on the leaning vehicle.

### [Height of Foot Placing Face of Foot Step in Top-Bottom Direction from Ground Surface]

A height of the foot placing face of the foot step in the top-bottom direction from a ground surface herein refers to a distance to the left-foot-placing face of the left foot step from a ground surface where the leaning vehicle is located, or a distance to the right-foot-placing face of the right foot step from the ground surface where the leaning vehicle is located, in the top-bottom direction of the leaning vehicle.

### [Upper Portion of Rear Wheel]

An upper portion of a rear wheel herein refers to a portion, in the rear wheel, further above than a wheel shaft that is a rotation center of the rear wheel.

### [Lighting Device]

A lighting device herein refers to equipment capable of emitting light. The lighting device includes, for example, a direction indicator, a taillight, a stop light or a license plate light. The lighting device may include therein a laser drawing device projecting an image on a road surface behind the leaning vehicle.

### [Reflector]

A reflector herein refers to equipment capable of reflecting light. The reflector includes, for example, a reflector reflecting light incident from the rear of the leaning vehicle, and a side reflector reflecting light incident from the left or the right of the leaning vehicle.

### ADVANTAGEOUS EFFECTS OF INVENTION

According to one embodiment of the present teaching, it is possible to obtain a configuration that allows for easy placement of a left foot on a left foot step and easy placement of a right foot on a right foot step in a leaning vehicle including a left front wheel and a right front wheel.

### BRIEF DESCRIPTION OF DRAWINGS

[FIG. 1] FIG. 1 is a left side view schematically illustrating an overall configuration of a leaning vehicle according to one embodiment.
[FIG. 2] FIG. 2 is a left side view illustrating a schematic configuration of the leaning vehicle in a state where a main frame cover is detached.
[FIG. 3] FIG. 3 is a front view illustrating a configuration of a vehicle front portion when the leaning vehicle is seen from the front.
[FIG. 4] FIG. 4 is a top view illustrating a schematic configuration of the leaning vehicle.
[FIG. 5] FIG. 5 is a rear view illustrating a schematic configuration of the leaning vehicle.
[FIG. 6] FIG. 6 is a front view illustrating a schematic configuration of the leaning vehicle that leans leftward.
[FIG. 7] FIG. 7 is a rear view illustrating a schematic configuration of the leaning vehicle that leans leftward.
[FIG. 8] FIG. 8 is a perspective view illustrating a schematic configuration of the leaning vehicle when seen from the right front.
[FIG. 9] FIG. 9 is a perspective view illustrating a schematic configuration of the leaning vehicle when seen from the right rear.
[FIG. 10] FIG. 10 is the rear view and the top view of the leaning vehicle arranged side by side.

### DESCRIPTION OF EMBODIMENT

An embodiment will be described hereinafter with reference to the drawings. In the drawings, the same or corresponding parts are denoted by the same reference numerals, and description thereof will not be repeated. The dimensions of components in the drawings do not strictly represent actual dimensions of the components and dimensional proportions of the components.

In the following description, arrow F in the drawings represents a forward direction of a leaning vehicle 1. Arrow B in the drawings represents a rearward direction of the leaning vehicle 1. Arrow U in the drawings represents an upward direction of the leaning vehicle 1. Arrow D in the drawings represents a downward direction of the leaning vehicle 1. Arrow R in the drawings represents a rightward direction of the leaning vehicle 1. Arrow L in the drawings represents a leftward direction of the leaning vehicle 1. A front-rear direction, a left-right direction, and a top-bottom direction of the leaning vehicle 1 refer to a front-rear direction, a left-right direction, and a top-bottom direction, respectively, with respect to the leaning vehicle 1 when seen from a driver of the leaning vehicle 1.

The leaning vehicle 1 according to this embodiment turns with a vehicle body frame leaning leftward or rightward with respect to a vertical direction. Thus, in addition to the directions with respect to the vehicle, directions with respect to the vehicle body frame are defined as follows. Arrow FF in the drawings represents a forward direction of the vehicle body frame. Arrow FB in the drawings represents a rearward direction of the vehicle body frame. Arrow FU in the drawings represents an upward direction of the vehicle body frame. Arrow FD in the drawings represents a downward direction of the vehicle body frame. Arrow FR in the drawings represents a rightward direction of the vehicle body frame. Arrow FL in the drawings represents a leftward direction of the vehicle body frame. A front-rear direction, a left-right direction, and a top-bottom direction of the vehicle body frame refer to a front-rear direction, a left-right direction, and a top-bottom direction, respectively, with respect to the vehicle body frame when seen from a passenger of the leaning vehicle.

### (Overall Configuration)

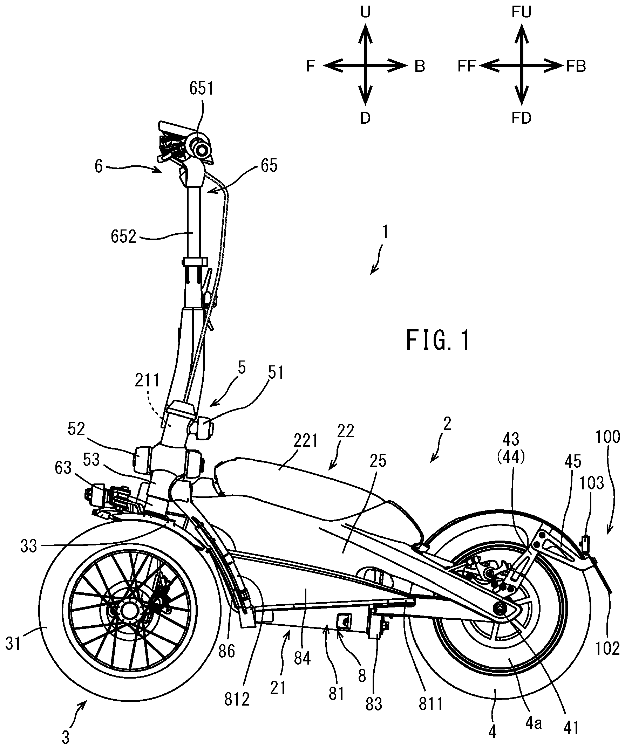

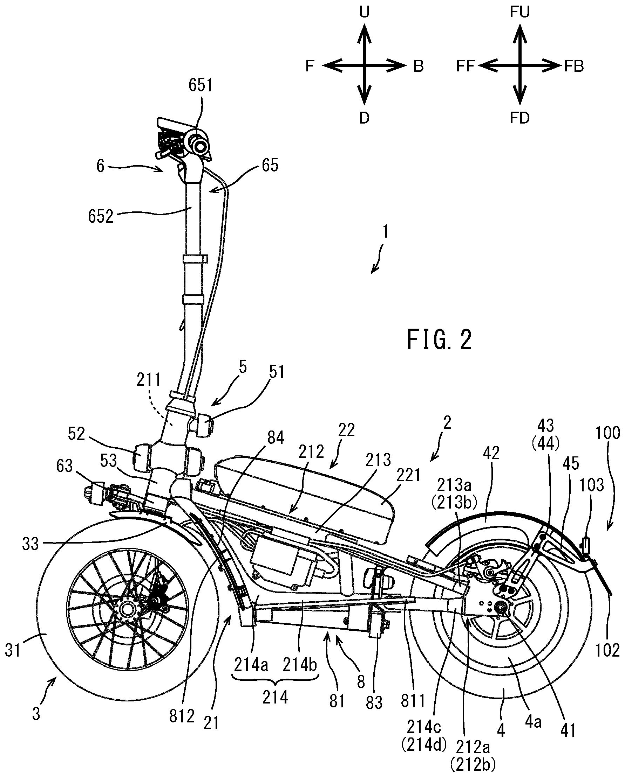

FIG. 1 is a left side view schematically illustrating an overall configuration of the leaning vehicle 1 according to the embodiment. FIG. 2 is a left side view illustrating a state where a main frame cover 25 is detached in the leaning vehicle 1. The leaning vehicle 1 includes a vehicle body 2, a pair of left and right front wheels 3, a rear wheel 4, a linkage mechanism 5, a steering mechanism 6, a lean suppressing mechanism 7 and a load transfer mechanism 8. That is, the leaning vehicle 1 according to this embodiment is a three-wheeled vehicle including the pair of left and right front wheels 3. The leaning vehicle 1 is also a vehicle that leans leftward when turning to the left and leans rightward when turning to the right.

The leaning vehicle 1 does not include a seat on which a driver is seated. That is, the leaning vehicle 1 is a so-called standing-type vehicle which a standing driver drives while standing. The leaning vehicle 1 does not include a rear arm supporting the rear wheel 4. The rear wheel 4 of the leaning vehicle 1 is supported by a vehicle body frame 21 described later. The leaning vehicle 1 does not include buffer devices that elastically support the front wheels 3 and the rear wheel 4 such that the front wheels 3 and the rear wheel 4 are allowed to be displaced. The front wheels 3 and the rear wheel 4 of the leaning vehicle 1 are supported on the vehicle body frame 21 described later without interposition of buffer devices.

The vehicle body 2 includes the vehicle body frame 21 and a power unit 22. In FIGS. 1 and 2, the vehicle body frame 21 is in an upright state. In the case of referring to FIGS. 1 and 2, the following description is based on a premise that the vehicle body frame 21 is in the upright state. The upright state of the vehicle body frame 21 refers to a state where the top-bottom direction of the vehicle body frame 21 coincides with the vertical direction.

As illustrated in FIG. 2, the vehicle body frame 21 supports the power unit 22, for example. The vehicle body frame 21 includes a head pipe 211 and a main frame 212.

The head pipe 211 is located in a front portion of the leaning vehicle 1. When the leaning vehicle 1 is seen from the left, an upper portion of the head pipe 211 is located further rearward than a lower portion of the head pipe 211 in the front-rear direction of the vehicle body frame 21. The linkage mechanism 5 is disposed around the head pipe 211. A steering shaft 652 described later is rotatably inserted in the head pipe 211.

The main frame 212 is connected to the head pipe 211. The main frame 212 is located further rearward than the head pipe 211 in the front-rear direction of the vehicle body frame 21. The main frame 212 supports the power unit 22. A rear end of the main frame 212 supports the rear wheel 4 such that the rear wheel 4 is rotatable about a wheel shaft 41. As illustrated in FIG. 1, the main frame 212 is covered with the main frame cover 25. The main frame cover 25 is supported by the main frame 212. The main frame cover 25 is a resin member.

As illustrated in FIG. 2, the main frame 212 includes an upper frame 213 and an under frame 214.

When the vehicle body frame 21 is seen from the left, the upper frame 213 extends rearward in the front-rear direction of the vehicle body frame 21 and downward in the top-bottom direction of the vehicle body frame 21 from the head pipe 211 toward the rear wheel 4. A rear end of the upper frame 213 is branched into two parts respectively located at the left and right of the rear wheel 4. Specifically, the upper frame 213 includes an upper-frame-left-rear end 213a located at the left of the rear wheel 4 and an upper-frame-right-rear end 213b located at the right of the rear wheel 4. The upper-frame-left-rear end 213a and the upper-frame-right-rear end 213b support the rear wheel 4 together with an under-frame-left-rear end 214c and an under-frame-right-rear end 214d, described later. The power unit 22 is supported by the upper frame 213.

The under frame 214 includes an under-frame-front portion 214a and an under-frame-rear portion 214b. When the vehicle body frame 21 is seen from the left, the under-frame-front portion 214a extends from the head pipe 211 rearward in the front-rear direction of the vehicle body frame 21 and downward in the top-bottom direction of the vehicle body frame 21. A front end of the under-frame-front portion 214a is connected to the head pipe 211.

The under-frame-rear portion 214b extends rearward from a rear end of the under-frame-front portion 214a in the front-rear direction of the vehicle body frame 21. A rear end of the under-frame-rear portion 214b is branched into two parts respectively located at the left and right of the rear wheel 4. Specifically, the under-frame-rear portion 214b includes the under-frame-left-rear end 214c located at the left of the rear wheel 4 and the under-frame-right-rear end 214d located at the right of the rear wheel 4.

The under-frame-left-rear end 214c is connected to the upper-frame-left-rear end 213a. The connection between the under-frame-left-rear end 214c and the upper-frame-left-rear end 213a constitutes a main-frame-left-rear end 212a. The under-frame-right-rear end 214d is connected to the upper-frame-right-rear end 213b. The connection between the under-frame-right-rear end 214d and the upper-frame-right-rear end 213b constitutes a main-frame-right-rear end 212b. The main-frame-left-rear end 212a and the main-frame-right-rear end 212b support the rear wheel 4.

The main frame 212 includes the upper frame 213 and the under frame 214, described above, so that strength and stiffness of the main frame 212 can be thereby enhanced. In a case where the height of the main frame in the top-bottom direction of the vehicle body frame is reduced, the main frame may include only the under frame.

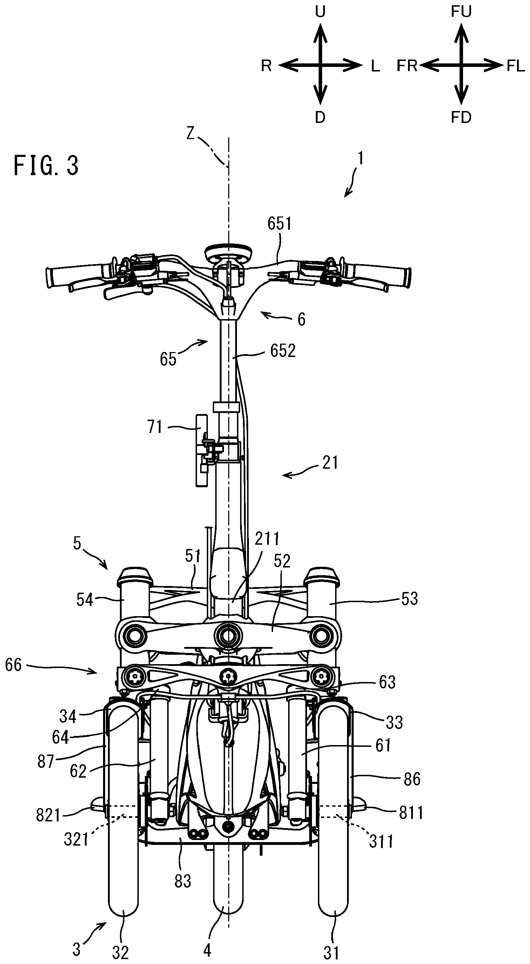

FIG. 3 is a front view of a front portion of the leaning vehicle 1 when seen from the front. In FIG. 3, the vehicle body frame 21 is in an upright state. In the case of referring to FIG. 3, the following description is based on a premise that the vehicle body frame 21 is in the upright state.

As illustrated in FIGS. 1 through 3, the pair of left and right front wheels 3 is located further downward than the head pipe 211 and the linkage mechanism 5 in the top-bottom direction of the vehicle body frame 21. As illustrated in FIG. 2, the pair of left and right front wheels 3 is supported by a left suspension part 61 and a right suspension part 62, described later.

As illustrated in FIGS. 1 and 2, the rear wheel 4 is located between a left front wheel 31 and a right front wheel 32 when the vehicle body frame 21 is seen in the front-rear direction, and located further rearward than the left front wheel 31 and the right front wheel 32 in the front-rear direction of the vehicle body frame 21.

The power unit 22 generates a driving force for causing the leaning vehicle 1 to travel. As illustrated in FIG. 2, the power unit 22 is located further forward than the wheel shaft 41 of the rear wheel 4 in the front-rear direction of the vehicle body frame 21. The power unit 22 is fixed to the vehicle body frame 21. The power unit 22 includes an unillustrated motor and a battery 221. In this embodiment, the motor is disposed in a wheel 4a of the rear wheel 4. Electric power is supplied to the motor from the battery 221 fixed to the upper frame 213 of the vehicle body frame 21.

As illustrated in FIG. 3, the pair of left and right front wheels 3 includes the left front wheel 31 and the right front wheel 32. The left front wheel 31 is located further leftward than the head pipe 211 that is a part of the vehicle body frame 21 in the left-right direction of the vehicle body frame 21. The right front wheel 32 is located further rightward than the head pipe 211 in the left-right direction of the vehicle body frame 21. That is, the left front wheel 31 and the right front wheel 32 are disposed side by side in the left-right direction of the vehicle body frame 21.

As illustrated in FIG. 3, the left front wheel 31 is connected to the left suspension part 61. Specifically, the left front wheel 31 is connected to a lower portion of the left suspension part 61. The left front wheel 31 is supported by the left suspension part 61 to be rotatable about a left axle 311. The left axle 311 is disposed in the lower portion of the left suspension part 61 and extends in the left-right direction of the vehicle body frame 21.

The right front wheel 32 is connected to the right suspension part 62. Specifically, the right front wheel 32 is connected to a lower portion of the right suspension part 62. The right front wheel 32 is supported by the right suspension part 62 to be rotatable about a right axle 321. The right axle 321 is disposed in the lower portion of the right suspension part 62 and extends in the left-right direction of the vehicle body frame 21.

The linkage mechanism 5 is a linkage mechanism of a parallel four-bar linkage (also referred to as a parallelogram linkage) type.

As illustrated in FIGS. 1 through 3, the linkage mechanism 5 is located further downward than a handlebar 651 in the top-bottom direction of the vehicle body frame 21. The linkage mechanism 5 is located further upward than the left front wheel 31 and the right front wheel 32 in the top-bottom direction of the vehicle body frame 21.

As illustrated in FIGS. 1 through 3, the linkage mechanism 5 includes an upper cross part 51, a lower cross part 52, a left side part 53, and a right side part 54. The linkage mechanism 5 is not interlocked with rotation of the steering shaft 652 about an intermediate steering axis Z caused by operation of the handlebar 651. That is, the linkage mechanism 5 does not rotate about the intermediate steering axis Z with respect to the vehicle body frame 21. A configuration of the linkage mechanism 5 is similar to a configuration disclosed in International Patent Application Publication No. 2020/111254. Thus, the linkage mechanism 5 will not be described in detail.

A portion of the linkage mechanism 5 located at the left is a left portion. For example, the left portion includes the left side part 53. A portion of the linkage mechanism 5 located at the right is a right portion. For example, the right portion includes the right side part 54.

As in the linkage mechanism disclosed in International Patent Application Publication No. 2020/111254, also in the linkage mechanism 5 of this embodiment, the upper cross part 51, the lower cross part 52, the left side part 53, and the right side part 54 are supported by the vehicle body frame 21 such that the upper cross part 51 and the lower cross part 52 are kept in parallel with each other, and the left side part 53 and the right side part 54 are kept in parallel with each other.

As illustrated in FIG. 3, the steering mechanism 6 includes the left suspension part 61, the right suspension part 62, a left bracket 63, a right bracket 64, a steering member 65, and a steering-force-transfer mechanism 66. A configuration of the steering mechanism 6 is similar to that of a steering mechanism disclosed in International Patent Application Publication No. 2020/111254. Thus, the configuration of the steering mechanism 6 will not be described in detail. A steering operation of the leaning vehicle 1 using the steering mechanism 6 is also similar to a steering operation disclosed in International Patent Application Publication No. 2020/111254, and thus, will not be described in detail.

The left suspension part 61 supports the left front wheel 31 to the linkage mechanism 5. The left suspension part 61 extends in the direction in which the intermediate steering axis Z extends. A lower end of the left suspension part 61 supports the left front wheel 31. An upper end of the left suspension part 61 is fixed to the left bracket 63.

The right suspension part 62 supports the right front wheel 32 to the linkage mechanism 5. The right suspension part 62 extends in the direction in which the intermediate steering axis Z extends. A lower end of the right suspension part 62 supports the right front wheel 32. An upper end of the right suspension part 62 is fixed to the right bracket 64.

The steering member 65 includes the handlebar 651 and the steering shaft 652.

The handlebar 651 is connected to an upper portion of the steering shaft 652. A part of the steering shaft 652 is rotatably supported by the head pipe 211. The steering shaft 652 rotates about the intermediate steering axis Z in accordance with an operation on the handlebar 651 by a driver.

An operation of the leaning vehicle 1 in which the leaning vehicle 1 leans leftward or rightward is similar to a lean operation disclosed in International Patent Application Publication No. 2020/111254. Thus, the operation in which the leaning vehicle 1 leans leftward or rightward will not be described in detail.

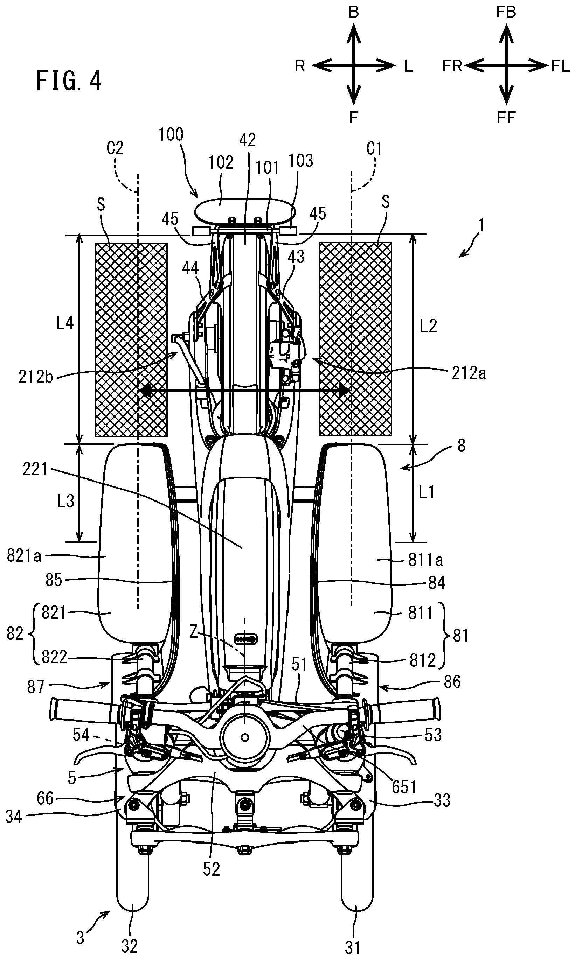

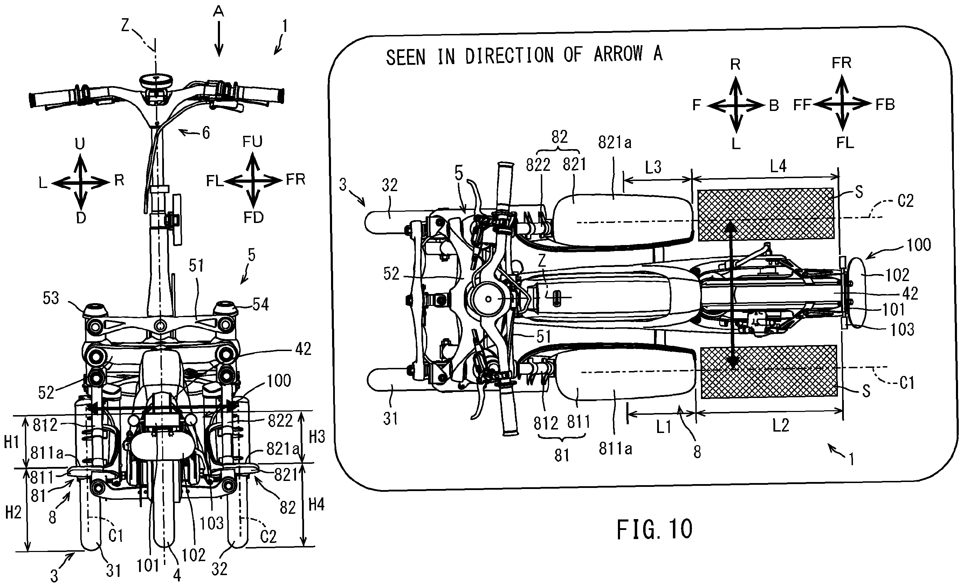

FIG. 4 is a top view of the leaning vehicle 1 when seen from above in the top-bottom direction of the vehicle body frame 21. In FIG. 4, the vehicle body frame 21 is in an upright state. In the case of referring to FIG. 4, the following description is based on a premise that the vehicle body frame 21 is in the upright state. FIG. 10 also shows the same diagram of FIG. 4.

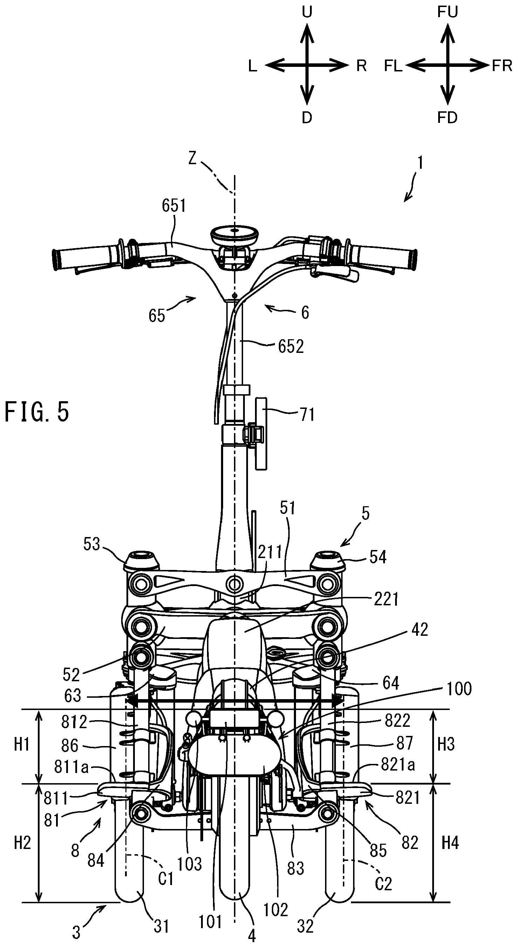

As illustrated in FIGS. 4 and 5, the load transfer mechanism 8 includes a left-foot-load-transfer part 81, a right-foot-load-transfer part 82, and a left-right-coupling member 83.

The left-foot-load-transfer part 81 includes a left-foot-placing part 811 (left foot step) and a left coupling part 812. At least a part of the left-foot-placing part 811 is located rearward of the left front wheel 31.

The left-foot-placing part 811 includes a left-foot-placing face 811a on which the left foot of a standing driver is placed. The left coupling part 812 couples the left-foot-placing part 811 and the left side part 53 of the linkage mechanism 5 to each other. As illustrated in FIG. 1, the left coupling part 812 extends from the left side part 53 rearward in the front-rear direction of the vehicle body frame 21 and downward in the top-bottom direction of the vehicle body frame 21. A rear end of the left coupling part 812 is coupled to the left-foot-placing part 811. The left-foot-load-transfer part 81 is configured to be capable of transferring a load of the driver input through the left-foot-placing part 811 to the left side part 53. The left coupling part may be integrated with the left side part.

As illustrated in FIGS. 4 and 5, the right-foot-load-transfer part 82 includes a right-foot-placing part 821 (right foot step) and a right coupling part 822. At least a part of the right-foot-placing part 821 is located rearward of the right front wheel 32.

The right-foot-placing part 821 includes a right-foot-placing face 821a on which the right foot of a standing driver is placed. The right coupling part 822 couples the right-foot-placing part 821 and the right side part 54 of the linkage mechanism 5 to each other. The right coupling part 822 extends from the right side part 54 rearward in the front-rear direction of the vehicle body frame 21 and downward in the top-bottom direction of the vehicle body frame 21. A rear end of the right coupling part 822 is coupled to the right-foot-placing part 821. The right-foot-load-transfer part 82 is configured to be capable of transferring a load of the driver input through the right-foot-placing part 821 to the right side part 54. The right coupling part may be integrated with the right side part

With the configuration described above, a load applied to the left-foot-placing part 811 through the left foot of the driver and a load applied to the right-foot-placing part 821 through the right foot of the driver are individually adjusted to thereby control leaning of the vehicle body frame 21.

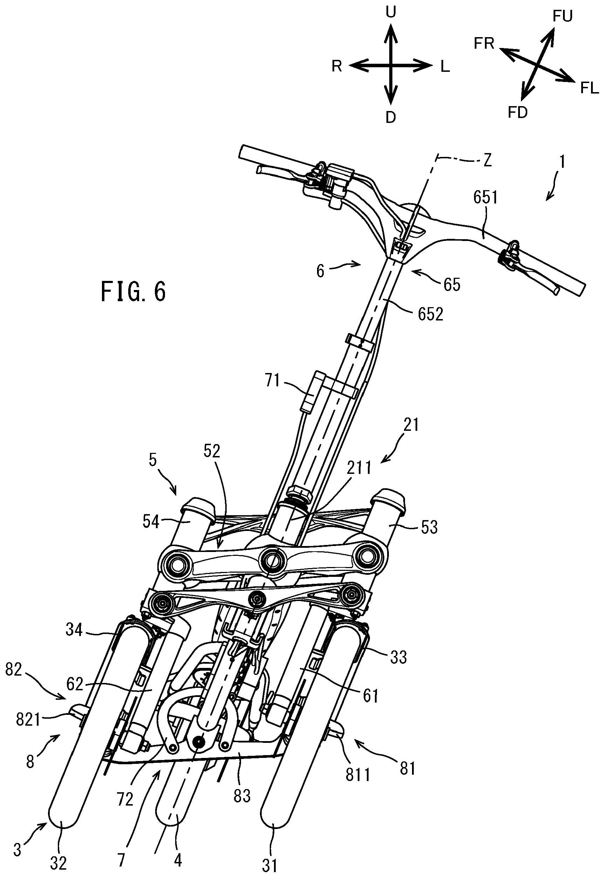

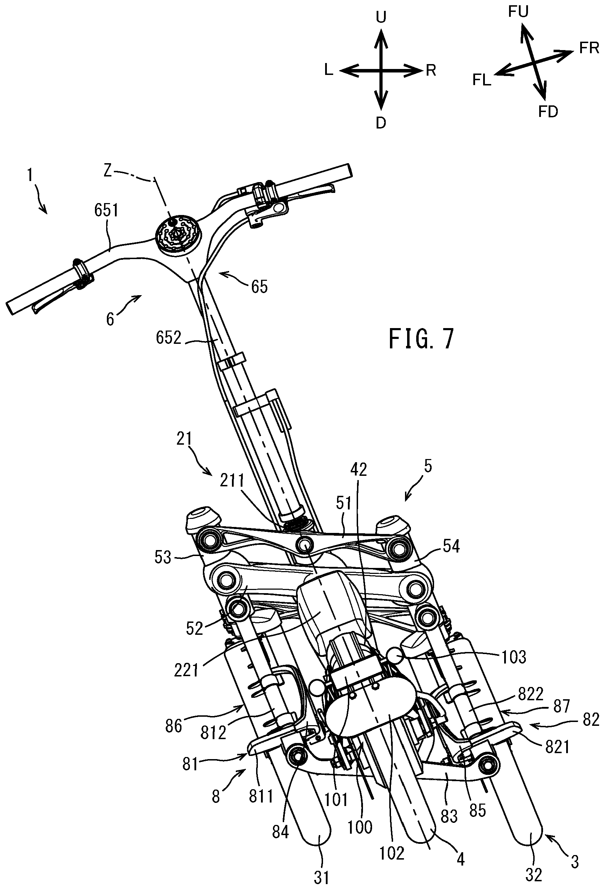

For example, as illustrated in FIGS. 6 and 7, when the vehicle body frame 21 leans to the left of the leaning vehicle 1, the left side part 53 is located further upward than the right side part 54 in the top-bottom direction of the vehicle body frame 21. FIG. 6 is a front view of the leaning vehicle 1 in a state where the vehicle body frame 21 leans leftward when seen from the front of the vehicle body frame 21. FIG. 7 is a rear view of the leaning vehicle 1 in a state where the vehicle body frame 21 leans leftward when seen from the rear of the vehicle body frame 21.

When a load is applied by a left foot to the left side part 53 through the left-foot-placing part 811, a force is exerted to the left side part 53 such that the left side part 53 is displaced in the downward direction of the vehicle body frame 21. Accordingly, leftward leaning of the vehicle body frame 21 can be suppressed in the left-right direction of the leaning vehicle 1.

On the other hand, when the vehicle body frame 21 leans to the right of the leaning vehicle 1, the right side part 54 is located further upward than the left side part 53 in the top-bottom direction of the vehicle body frame 21. When a load is applied by a right foot to the right side part 54 through the right-foot-placing part 821, a force is exerted to the right side part 54 such that the right side part 54 is displaced in the downward direction of the vehicle body frame 21. Accordingly, rightward leaning of the vehicle body frame 21 can be suppressed in the left-right direction of the leaning vehicle 1.

When the vehicle body frame 21 leans leftward or rightward from the upright state, the normal direction to the placing face of the left-foot-placing part 811 and the normal direction to the placing face of the right-foot-placing part 821 change. However, an angle formed by the direction in which the head pipe 211 extends (the direction in which the intermediate steering axis Z extends) and the placing face of the left-foot-placing part 811 and the placing face of the right-foot-placing part 821 does not change. That is, the normal direction to the placing face of the left-foot-placing part 811 and the normal direction to the placing face of the right-foot-placing part 821 constantly coincide with the top-bottom direction of the vehicle body frame 21.

The left-right-coupling member 83 couples the left-foot-placing part 811 and the right-foot-placing part 821 to each other in the left-right direction of the vehicle body frame 21 under the vehicle body frame 21. In the left-right direction of the vehicle body frame 21, a center portion of the left-right-coupling member 83 is supported by a rotation support part (not shown) fixed to a lower portion of the under frame 214 of the vehicle body frame 21 to be rotatable about the under frame 214. Accordingly, in the top-bottom direction of the vehicle body frame 21, the left-right-coupling member 83 leans in the top-bottom direction in accordance with upward or downward movement of the left-foot-placing part 811 and the right-foot-placing part 821.

In this manner, the left-foot-placing part 811 and the right-foot-placing part 821 move upward or downward in an interlocked manner in accordance with an input of a load from the left foot to the left-foot-placing part 811 or an input of a load from the right foot to the right-foot-placing part 821. Thus, with the input of a load from the left foot to the left-foot-placing part 811 or the input of a load from the right foot to the right-foot-placing part 821 described above, leftward or rightward leaning of the vehicle body frame 21 can be easily suppressed.

Not claimed in the invention, the lean suppressing mechanism 7 suppresses leftward or rightward leaning of the linkage mechanism 5. The lean suppressing mechanism 7 includes a lean suppressing operator 71, a lean-suppressing-brake disc 72, and an unillustrated caliper. The lean suppressing operator 71 is a lever-shaped member attached to the steering shaft 652. The lean-suppressing-brake disc 72 is a plate-shaped member in a U shape, and fixed to the left-right-coupling member 83. The caliper is fixed to the under frame 214 of the main frame 212. The caliper is configured to be capable of sandwiching the lean-suppressing-brake disc 72 in the thickness direction.

An operation to rotate the lean suppressing operator 71 triggers switching between an active state and an inactive state of the lean suppressing mechanism 7. When the lean suppressing mechanism 7 is activated, the caliper is driven and sandwiches the lean-suppressing-brake disc 72 in its thickness direction. This suppresses swinging of the left-right-coupling member 83 of the load transfer mechanism 8 with respect to the under frame 214 of the main frame 212. As described above, the left coupling part 812 of the load transfer mechanism 8 is coupled to the left side part 53 of the linkage mechanism 5, and the right coupling part 822 of the load transfer mechanism 8 is coupled to right side part 54 of the linkage mechanism 5. Thus, by activating the lean suppressing mechanism 7 with an operation of the lean suppressing operator 71, leftward or rightward leaning of the linkage mechanism 5 with respect to the main frame 212 can be suppressed.

The leaning vehicle 1 includes the lean suppressing mechanism 7 described above, so that the leaning vehicle 1 can suppress leftward or rightward leaning of the linkage mechanism 5 by the lean suppressing mechanism 7 when a driver rides on the leaning vehicle 1. Thus, the driver can easily place the left foot on the left-foot-placing part 811 and easily place the right foot on the right-foot-placing part 821.

As illustrated in FIGS. 1 through 3, 6, and 8, the leaning vehicle 1 includes a left front fender 33 and a right front fender 34. The left front fender 33 is located above the left front wheel 31 in the top-bottom direction of the vehicle body frame 21. The left front fender 33 is located above the left front wheel 31, so that the left front fender 33 can prevent water splashed on the left front wheel 31 during traveling of the leaning vehicle 1 from spattering on the left foot of the driver.

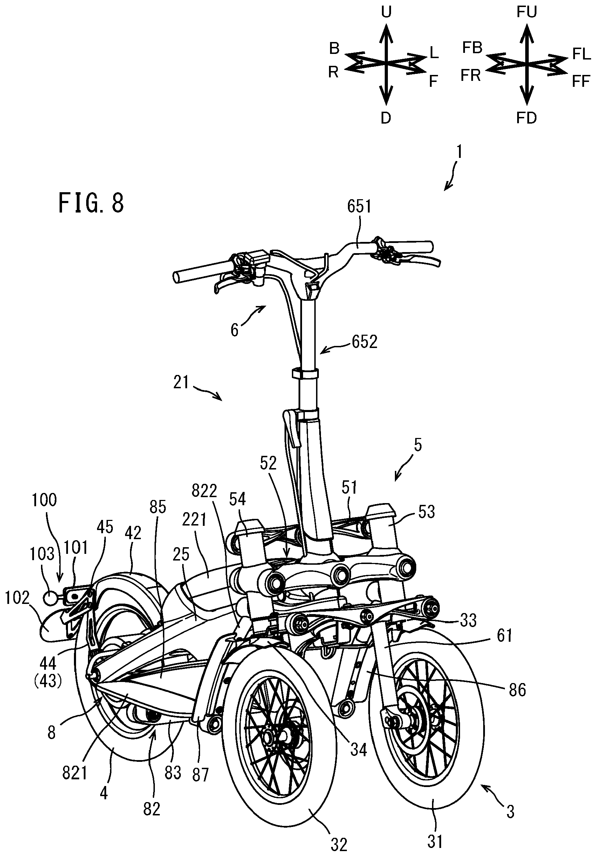

As illustrated in FIGS. 3 and 8, the right front fender 34 is located above the right front wheel 32 in the top-bottom direction of the vehicle body frame 21. The right front fender 34 is located above the right front wheel 32, so that the right front fender 34 can prevent water splashed on the right front wheel 32 during traveling of the leaning vehicle 1 from spattering on the right foot of the driver.

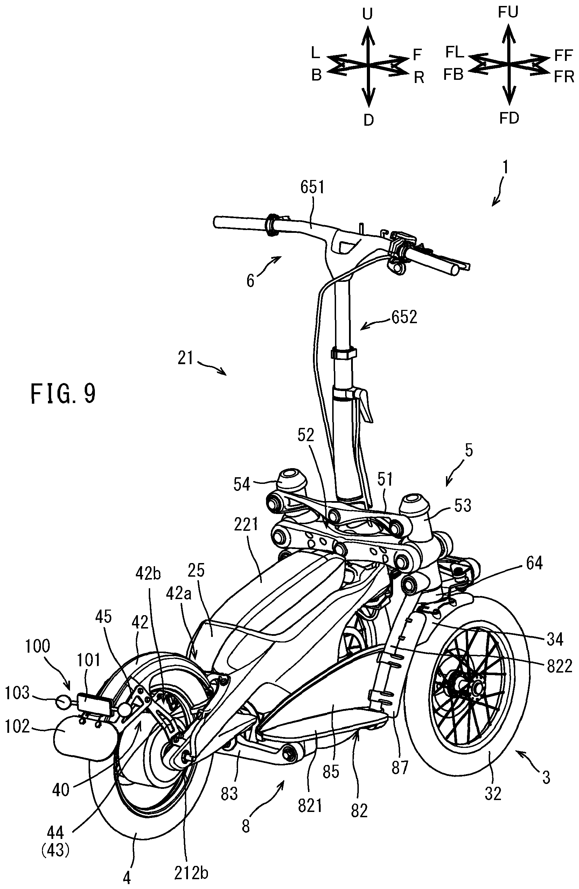

As illustrated in FIGS. 1, 5 and 7 through 9, the leaning vehicle 1 includes a left foot guard 84 and a right foot guard 85. The left foot guard 84 is a resin plate member having a triangular shape in plane view. The left foot guard 84 is fixed to a right end of the left-foot-placing part 811 and the left coupling part 812. The right foot guard 85 is a resin plate member having a triangular shape in plane view. The right foot guard 85 is fixed to a left end of the right-foot-placing part 821 and the right coupling part 822.

As illustrated in FIGS. 5, 8 and 9, the leaning vehicle 1 includes a left front guard 86 and a right front guard 87. The left front guard 86 is a resin plate member having a rectangular shape in plane view. The left front guard 86 is fixed to the left coupling part 812 such that the longitudinal direction of the left front guard 86 extends along the direction in which the left coupling part 812 extends. The right front guard 87 is a resin plate member having a rectangular shape in plane view. The right front guard 87 is fixed to the right coupling part 822 such that the longitudinal direction of the right front guard 87 extends along the direction in which the right coupling part 822 extends.

### (Rear Fender)

As illustrated in FIGS. 1, 2, 4, 5, 8 and 9, the leaning vehicle 1 includes a rear fender 42. The rear fender 42 is located above the rear wheel 4 in the top-bottom direction of the vehicle body frame 21. The rear fender 42 extends rearward in the front-rear direction of the vehicle body frame 21 and upward in the top-bottom direction of the vehicle body frame 21 from the main frame 212. The rear fender 42 is a resin member.

The rear fender 42 is supported by the main frame 212 in each of a front portion and a rear portion. Specifically, the front portion of the rear fender 42 is fixed to the main frame cover 25 attached to the main frame 212 by a fastening member such as a bolt. The rear portion of the rear fender 42 is fixed to a rear-fender-left-supporting part 43 attached to the main-frame-left-rear end 212a, and to a rear-fender-right-supporting part 44 attached to the main-frame-right-rear end 212b.

The rear-fender-left-supporting part 43 and the rear-fender-right-supporting part 44 have higher support stiffness than a portion, in the rear fender 42, fixed to the main frame cover 25 attached to the main frame 212.

The rear-fender-left-supporting part 43 and the rear-fender-right-supporting part 44 correspond to a rear-member-supporting part 40 supporting the rear fender 42 to the vehicle body frame 21, and also correspond to a rear-fender-rear-supporting part 42b. In the rear fender 42, the portion which is fixed to the main frame cover 25 attached to the main frame 212 corresponds to a rear-fender-front-supporting part 42a.

Each of the rear-fender-left-supporting part 43 and the rear-fender-right-support portion 44 is a metallic plate-shaped member, and extends in a radial direction of the rear wheel 4. The rear-fender-left-supporting part 43 and the rear-fender-right-supporting part 44 extend in the top-bottom direction. The rear-fender-left-supporting part 43 is connected to the main-frame-left-rear end 212a and the rear fender 42 at the left of the rear wheel 4. That is, a lower end of the rear-fender-left-supporting part 43 is connected to the main-frame-left-rear end 212a. An upper end of the rear-fender-left-supporting part 43 is connected to a left portion of the rear fender 42. The rear-fender-right-supporting part 44 is connected to the main-frame-right-rear end 212b at the right of the rear wheel 4. That is, a lower end of the rear-fender-right-supporting part 44 is connected to the main-frame-right-rear end 212b. An upper end of the rear-fender-right-supporting part 44 is connected to a right portion of the rear fender 42.

A pair of rear-equipment-supporting parts 45 supporting rear equipment 100 described later are connected to the rear fender 42. The pair of rear-equipment-supporting parts 45 are metallic plate-shaped parts, and extend in a front-rear direction. Front portions of the pair of rear-equipment-supporting parts 45 are connected to a connecting portion between the rear fender 42 and the rear-fender-left-supporting part 43, and to a connecting portion between the rear fender 42 and the rear-fender-right-supporting part 44, respectively. That is, the pair of rear-equipment-supporting parts 45 are connected to the upper portions of the rear-fender-left-supporting part 43 and the rear-fender-right-supporting part 44. Accordingly, the pair of rear-equipment-supporting parts 45 can be supported by the rear-fender-left-supporting part 43 and the rear-fender-right-supporting part 44 with high stiffness. The pair of rear-equipment-supporting parts may be integrally formed.

As described later, the rear equipment 100 is fixed to rear portions of the pair of rear-equipment-supporting parts 45 by fastening members such as bolts.

### (Rear Equipment)

The leaning vehicle 1 has the rear equipment 100 supported by rear ends of the vehicle body frame 21 and not including the rear fender 42. The rear equipment 100 is supported to the main frame 212 by the rear-fender-left-supporting part 43 and the rear-fender-right-supporting part 44. The rear equipment 100 includes, for example, a license-plate-supporting bracket 102, a reflector 101, and a lighting device 103.

The rear equipment 100 may include, for example, at least one of the license-plate-supporting bracket 102, the reflector 101 or the lighting device 103, or may include other components disposed in a rear portion of the leaning vehicle 1. The rear equipment 100 may include a plurality of components, or may include only a single component.

The reflector 101 includes, for example, a reflector reflecting light incident from the rear of the leaning vehicle 1, and a side reflector reflecting light incident from the left or the right of the leaning vehicle 1. In this embodiment, the reflector 101 is supported at a position further upward than a rotation center of the rear wheel 4 by the pair of rear-equipment-supporting parts 45. The reflector 101 is a flat plate member with a reflective material provided on the surface. The reflector 101 is attached to the pair of rear-equipment-supporting parts 45 such that the surface provided with the reflective material faces rearward.

The license-plate-supporting bracket 102 is, for example, a plate-shaped or frame-shaped member that supports a license plate. In this embodiment, the license-plate-supporting bracket 102 is located further upward than the wheel shaft 41 of the rear wheel 4, and supported by the pair of rear-equipment-supporting parts 45. In this embodiment, the reflector 101 is located further upward than the license-plate-supporting bracket 102.

The lighting device 103 is equipment capable of emitting light, such as a direction indicator, a taillight, a stop light or a license plate light. The lighting device 103 may include a laser drawing device projecting an image on a road surface behind the leaning vehicle 1.

In this embodiment, the lighting devices 103 are located at the left and the right of the reflector 101. The lighting devices 103 may be located further upward than the reflector 101 or may be located further downward than the reflector 101, in the top-bottom direction. The lighting devices 103 are also located further upward than the wheel shaft 41 of the rear wheel 4, and supported by the pair of rear-equipment-supporting parts 45.

The reflector 101 may be supported by the pair of rear-equipment-supporting parts 45 through another supporting member. The license-plate-supporting bracket 102 may be supported by the pair of rear-equipment-supporting parts 45 through another supporting member. The reflector 101 may be located at the same height as the wheel shaft 41 of the rear wheel 4 or may be located further downward than the wheel shaft 41 of the rear wheel 4, in the top-bottom direction. The license-plate-supporting bracket 102 may be located at the same height as the wheel shaft 41 of the rear wheel 4 or may be located further downward than the wheel shaft 41 of the rear wheel 4, in the top-bottom direction. The reflector 101 may be located further downward than the license-plate-supporting bracket 102. The lighting devices 103 may be located at the same height as the wheel shaft 41 of the rear wheel 4 or may be located further downward than the wheel shaft 41 of the rear wheel 4, in the top-bottom direction.

As illustrated in FIGS. 4 and 5, the rear equipment 100 is located between a center in the left-right direction of the left-foot-placing part 811 and a center in the left-right direction of the right-foot-placing part 821 when the leaning vehicle 1 is seen from the rear. Accordingly, the rear equipment 100 can be disposed at a center in the left-right direction of the leaning vehicle 1. This can prevent the rear equipment 100 from hampering a driver when the driver gets on or off the leaning vehicle 1. In FIGS. 4 and 5, C1 denotes a center line passing the center in the left-right direction of the left-foot-placing part 811 and extending in the front-rear direction, and C2 denotes a center line passing the center in the left-right direction of the right-foot-placing part 821 and extending in the front-rear direction.

As illustrated in FIG. 4, the rear equipment 100 is located in the rear portion of the leaning vehicle 1 when the leaning vehicle 1 is seen from above. Specifically, a distance L2 in the front-rear direction from a rear end of the left-foot-placing part 811 to a front end of the rear equipment 100 is greater than a half L1 of a length of the left-foot-placing part 811 in the front-rear direction, and a distance L4 in the front-rear direction from a rear end of the right-foot-placing part 821 to the front end of the rear equipment 100 is greater than a half L3 of a length of the right-foot-placing part 821 in the front-rear direction.

Accordingly, the rear equipment 100 can be disposed in the rear portion of the leaning vehicle 1 in such a manner to secure a space between the rear equipment 100 and each of the left-foot-placing part 811 and the right-foot-placing part 821 when the leaning vehicle 1 is seen in the left-right direction, at the left and the right of the rear wheel 4 of the leaning vehicle 1.

When a driver rides on the leaning vehicle 1, the driver rides on the leaning vehicle 1 from the rear. When the driver rides on the leaning vehicle 1 from the rear, the driver needs to place the feet at a left position and a right position of the rear wheel 4 of the leaning vehicle 1. Thus, it is necessary to secure spaces which allow the driver's feet to be placed therein at the left position and the right position of the rear wheel 4 of the leaning vehicle 1.

Therefore, by securing the space between the rear equipment 100 and each of the left-foot-placing part 811 and the right-foot-placing part 821 at the left and the right of the rear wheel 4 of the leaning vehicle 1, when the driver rides on the leaning vehicle 1 as described above, spaces S (see the crosshatched portions in FIG. 4) for the driver's feet to be placed therein can be secured at the left and the right of the rear wheel 4 of the leaning vehicle 1. Thus, when the driver rides on the leaning vehicle 1, the driver can easily place the left foot on the left-foot-placing face 811a and easily place the right foot on the right-foot-placing face 821a.

The half L1 of the length of the left-foot-placing part 811 in the front-rear direction may be equal to the half L3 of the length of the right-foot-placing part 821 in the front-rear direction, or may differ from the half L3 of the length of the right-foot-placing part 821 in the front-rear direction. The distance L2 in the front-rear direction from the rear end of the left-foot-placing part 811 to the front end of the rear equipment 100 may be equal to the distance L4 in the front-rear direction from the rear end of the right-foot-placing part 821 to the front end of the rear equipment 100, or may differ from the distance L4 in the front-rear direction from the rear end of the right-foot-placing part 821 to the front end of the rear equipment 100.

As illustrated in FIG. 5, a height H1 of an upper end of the rear equipment 100 in the top-bottom direction from the left-foot-placing face 811a of the left-foot-placing part 811 is less than a height H2 of the left-foot-placing face 811a of the left-foot-placing part 811 in the top-bottom direction from a ground surface, and a height H3 of the upper end of the rear equipment 100 in the top-bottom direction from the right-foot-placing-face 821a of the right-foot-placing part 821 is less than a height H4 of the right-foot-placing face 821a of the right-foot-placing part 821 in the top-bottom direction from the ground surface.

Accordingly, when the driver rides on the leaning vehicle 1, the driver, with one of the feet placed on its corresponding one of the left-foot-placing face 811a or the right-foot-placing face 821a, can easily place the other foot on the other of the left-foot-placing face 811a or the right-foot-placing face 821a. Thus, when the driver rides on the leaning vehicle 1, the driver can easily place the left foot on the left-foot-placing face 811a and easily place the right foot on the right-foot-placing face 821a.

The upper end of the rear equipment 100 is located further downward than an upper end of the rear fender 42. This can prevent the rear equipment 100 from having contact with the driver's foot when the driver rides on the leaning vehicle 1.

In this embodiment, the upper end of the rear equipment 100 refers to an upper end of a portion, in the rear equipment 100, located under an area which the driver's foot passes across when the driver rides on the leaning vehicle 1. In a case where the rear equipment 100 includes a plurality of components, the upper end of the rear equipment 100 refers to the highest end of portions, in the rear equipment 100, located under an area which the driver's foot passes across when the driver rides on the leaning vehicle 1.

The leaning vehicle 1 of this embodiment includes: the vehicle body frame 21; the left front wheel 31 disposed at the left of the vehicle body frame 21 in the left-right direction of the vehicle body frame 21; the right front wheel 32 disposed at the right of the vehicle body frame 21 in the left-right direction of the vehicle body frame 21; the rear wheel 4 located further rearward than the left front wheel 31 and the right front wheel 32 and rotatably supported by a rear portion of the vehicle body frame 21; the linkage mechanism 5 supported by a front portion of the vehicle body frame 21 and allowing the vehicle body frame 21 to lean leftward or rightward in the left-right direction of the vehicle body frame 21; the left-foot-placing part 811 which includes the left-foot-placing face 811a on which the left foot of a driver is placed, and is located between the left front wheel 31 and the rear wheel 4; and the right-foot-placing part 821 which includes the right-foot-placing face 821a on which the right foot of the driver is placed, and is located between the right front wheel 32 and the rear wheel 4. The leaning vehicle 1 further includes: the load transfer mechanism 8 capable of transferring a load to a left portion of the linkage mechanism 5 through the left-foot-placing part 811 and transferring a load to a right portion of the linkage mechanism 5 through the right-foot-placing part 821, or capable of transferring a load to the left portion of the linkage mechanism 5 through the right-foot-placing part 821 and transferring a load to the right portion of the linkage mechanism 5 through the left-foot-placing part 811; and the rear equipment 100 which is supported by the rear portion of the vehicle body frame 21 and does not include the rear fender covering at least a part of an upper portion of the rear wheel 4. The rear equipment 100 is located in the rear portion of the leaning vehicle 1 such that the distance L2 in the front-rear direction from the rear end of the left-foot-placing part 811 to the front end of the rear equipment 100 is greater than the half L1 of the length of the left-foot-placing part 811 in the front-rear direction, and the distance L4 in the front-rear direction from the rear end of the right-foot-placing part 821 to the front end of the rear equipment 100 is greater than the half L3 of the length of the right-foot-placing part 821 in the front-rear direction. The rear equipment 100 is located in the rear portion of the leaning vehicle 1 such that the height H1 of the upper end of the rear equipment 100 in the top-bottom direction from the left-foot-placing face 811a of the left-foot-placing part 811 is less than the height H2 of the left-foot-placing face 811a of the left-foot-placing part 811 in the top-bottom direction from the ground surface, and the height H3 of the upper end of the rear equipment 100 in the top-bottom direction from the right-foot-placing-face 821a of the right-foot-placing part 821 is less than the height H4 of the right-foot-placing face 821a of the right-foot-placing part 821 in the top-bottom direction from the ground surface. The rear equipment 100 is located between the center in the left-right direction of the left-foot-placing part 811 and the center in the left-right direction of the right-foot-placing part 821 when the leaning vehicle 1 is seen from the rear.

When a driver rides on the leaning vehicle 1 described above, the driver rides on the leaning vehicle 1 from the rear. When the driver rides on the leaning vehicle 1 from the rear, the driver needs to place the feet at the left position and the right position of the rear wheel 4 of the leaning vehicle 1. Thus, it is necessary to secure spaces which allow the driver's feet to be placed therein at the left position and the right position of the rear wheel
of the leaning vehicle 1.

In the above-described configuration, therefore, the rear equipment 100 is located at a position apart in the front-rear direction from the left-foot-placing part 811 and the right-foot-placing part 821, as well as located between the center in the left-right direction of the left-foot-placing part 811 and the center in the left-right direction of the right-foot-placing part 821. Accordingly, the spaces S for the driver's feet to be placed therein can be secured at the left and the right of the rear wheel 4.

Furthermore, the height H1 of the upper end of the rear equipment 100 in the top-bottom direction from the left-foot-placing face 811a of the left-foot-placing part 811 is less than the height H2 of the left-foot-placing face 811a of the left-foot-placing part 811 in the top-bottom direction from the ground surface, and the height H3 of the upper end of the rear equipment 100 in the top-bottom direction from the right-foot-placing-face 821a of the right-foot-placing part 821 is less than the height H4 of the right-foot-placing face 821a of the right-foot-placing part 821 in the top-bottom direction from the ground surface. This can prevent the rear equipment 100 from hampering the driver when the driver rides on the leaning vehicle 1.

Therefore, it is possible to obtain a configuration that allows for easy placement of the left foot on the left-foot-placing part 811 of the load transfer mechanism 8 and easy placement of the right foot on the right-foot-placing part 821 of the load transfer mechanism 8 in the leaning vehicle 1 including the left front wheel 31 and the right wheel 32.

The leaning vehicle 1 of this embodiment further includes the rear-fender-left-supporting part 43 and the rear-fender-right-supporting part 44 which support at least one of the rear fender 42 or the rear equipment 100 to the vehicle body frame 21.

Accordingly, at least one of the rear fender 42 or the rear equipment 100 can be supported to the vehicle body frame 21. Thus, a configuration with the rear fender 42 and the rear equipment 100 disposed in the rear portion of the leaning vehicle 1 can be easily achieved.

In the leaning vehicle 1 of this embodiment, the upper end of the rear equipment 100 is lower than the upper end of the rear fender 42. This can prevent the rear equipment 100 from having contact with the driver's foot and thereby hampering the driver when the driver rides on the leaning vehicle 1.

### (Other Embodiments)

The embodiment of the present teaching has been described above, but the embodiment is merely an example for carrying out the present teaching. Thus, the present teaching is not limited to the embodiment described above, and the embodiment may be modified as necessary within a range not departing from the gist of the present teaching.

In the embodiment, the load transfer mechanism 8 is capable of transferring a load to the left side part 53 of the linkage mechanism 5 through the left-foot-placing part 811 and capable of transferring a load to the right side part 54 of the linkage mechanism 5 through the right-foot-placing part 821. Alternatively, the load transfer mechanism may be capable of transferring a load to the left side part of the linkage mechanism through the right-foot-placing part and capable of transferring a load to the right side part of the linkage mechanism through the left-foot-placing part. The load transfer mechanism may be capable of transferring a load to a portion other than the left side part if the portion is located at the left of the linkage mechanism. The load transfer mechanism may be capable of transferring a load to a portion other than the right side part if the portion is located at the right of the linkage mechanism.

In the embodiment, the left-foot-placing part 811 is coupled to the left side part 53 of the linkage mechanism 5 with the left coupling part 812, and the right-foot-placing part 821 is coupled to the right side part 54 of the linkage mechanism 5 with the right coupling part 822. Alternatively, the configurations of the left-foot-placing part and the right-foot-placing part are not limited to the configurations of the embodiment, and may be configurations, for example, where these parts are fixed to the vehicle body frame.

In the embodiment, the leaning vehicle 1 includes the left foot guard 84 and the right foot guard 85. Alternatively, the leaning vehicle may not include the left foot guard. The leaning vehicle may not include the right foot guard.

In the embodiment, the left front guard 86 and the left foot guard 84 are separate components. The right front guard 87 and the right foot guard 85 are separate components. Alternatively, the left front guard and the left foot guard may be one unit. The right front guard and the right foot guard may be one unit.

In the embodiment, a front-lower-cross part 521, a rear-lower-cross part 522, and lower-cross-coupling parts 523 and 524 of the lower cross part 52 are integrally formed. Alternatively, the front-lower-cross part, the rear-lower-cross part and the lower-cross-coupling parts may be constituted of separate members. The front-lower-cross part and the lower-cross-coupling parts may be integrally formed, while the rear-lower-cross part may be a separate member from the front-lower-cross part and the lower-cross-coupling parts. The rear-lower-cross part and the lower-cross-coupling parts may be integrally formed, while the front-lower-cross part may be a separate member from the rear-lower-cross part and the lower-cross-coupling parts.

In the embodiment, the linkage mechanism 5 includes the upper cross part 51 located behind the head pipe 211. Alternatively, the linkage mechanism may include a front-upper-cross part provided in front of a rear-upper-cross part and the head pipe.

In the embodiment, the linkage mechanism 5 includes the upper cross part 51 and the lower cross part 52 whose intermediate portions in the left-right direction of the vehicle body frame 21 are rotatably supported by the head pipe 211. Alternatively, the linkage mechanism may have other configurations.

In the embodiment, the leaning vehicle 1 does not include a seat on which a driver is seated. Alternatively, the leaning vehicle may include a seat.

In the embodiment, the leaning vehicle 1 does not include a rear arm supporting the rear wheel 4. Alternatively, the leaning vehicle may include a rear arm supporting the rear wheel.

In the embodiment, the leaning vehicle 1 does not include buffer devices that elastically support the front wheels 3 and the rear wheel 4 such that the front wheels 3 and the rear wheel 4 are allowed to be displaced. Alternatively, the front wheels of the leaning vehicle may be supported by buffer devices. The rear wheel of the leaning vehicle may be supported by a buffer device.

Not claimed in the invention, the lean suppressing mechanism 7 has a configuration for switching between an active state and an inactive state of the lean suppressing mechanism 7 by manually operating the lean suppressing operator 71. Alternatively, the lean suppressing mechanism may have a configuration for automatically switching between the active state and the inactive state of the lean suppressing mechanism in accordance with a detection result of the state of the leaning vehicle. The leaning vehicle may not include the lean suppressing mechanism.

In the embodiment, the rear-fender-left-supporting part 43 and the rear-fender-right-supporting part 44 support the rear fender 42 and the rear equipment 100 to the vehicle body frame 21. Alternatively, the rear-fender-left-supporting part and the rear-fender-right-supporting part may support only one of the rear fender or the rear equipment to the vehicle body frame. At least one of the rear fender or the rear equipment may be supported by only one of the rear-fender-left-supporting part or the rear-fender-right-supporting part to the vehicle body frame.

In the embodiment, the upper end of the rear equipment 100 is lower than the upper end of the rear fender 42. Alternatively, the upper end of the rear equipment may be located at the same height as the upper end of the rear fender, or may be higher than the upper end of the rear fender. The leaning vehicle may not include the rear fender.

### REFERENCE SIGNS LIST

- 1: leaning vehicle
- 2: vehicle body
- 3: front wheel
- 4: rear wheel
- 5: linkage mechanism
- 6: steering mechanism
- 7: lean suppressing mechanism
- 8: load transfer mechanism
- 21: vehicle body frame
- 22: power unit
- 211: head pipe
- 212: main frame
- 212a: main-frame-left-rear end
- 212b: main-frame-right-rear end
- 213: upper frame
- 213a: upper-frame-left-rear end
- 213b: upper-frame-right-rear end
- 214: under frame
- 214a: under-frame-front portion
- 214b: under-frame-rear portion
- 214c: under-frame-left-rear end
- 214d: under-frame-right-rear end
- 221: battery
- 25: main frame cover
- 31: left front wheel
- 32: right front wheel
- 33: left front fender
- 34: right front fender
- 40: rear-member-supporting part
- 41: wheel shaft
- 42: rear fender
- 42a: rear-fender-front-supporting part
- 42b: rear-fender-rear-supporting part
- 43: rear-fender-left-supporting part
- 44: rear-fender-right-supporting part
- 45: rear-equipment-supporting part
- 51: upper cross part
- 52: lower cross part
- 53: left side part
- 54: right side part
- 61: left suspension part
- 62: right suspension part
- 65: steering member
- 651: handlebar
- 652: steering shaft
- 71: lean suppressing operator
- 72: lean-suppressing-brake disc
- 66: steering-force-transfer mechanism
- 81: left-foot-load-transfer part
- 811: left-foot-placing part (left foot step)
- 811a: left-foot-placing face
- 812: left coupling part
- 82: right-foot-load-transfer part
- 821: right-foot-placing part (right foot step)
- 821a: right-foot-placing face
- 822: right coupling part
- 83: left-right-coupling member
- 84: left foot guard
- 85: right foot guard
- 86: left front guard
- 87: right front guard
- 100: rear equipment
- 101: reflector
- 102: license-plate-supporting bracket
- 103: direction signal
- Z: intermediate steering axis
- L1: half of length of left-foot-placing part in front-rear direction
- L2: distance in front-rear direction from rear end of left-foot-placing part to front end of rear equipment
- L3: half of length of right-foot-placing part in front-rear direction
- L4: distance in front-rear direction from rear end of right-foot-placing part to front end of rear equipment
- C1, C2: center line
- S: space

## Claims

1. A leaning vehicle (1) configured to lean leftward when turning to left and lean rightward when turning to right, comprising:
a vehicle body frame (21);
a left front wheel (31) located at the left of the vehicle body frame (21) in a left-right direction of the vehicle body frame (21);
a right front wheel (32) located at the right of the vehicle body frame (21) in the left-right direction of the vehicle body frame (21);
a rear wheel (4) located between the left front wheel (31) and the right front wheel (32) when the vehicle body frame (21) is seen in a front-rear direction, and located further rearward than the left front wheel (31) and the right front wheel (32) in the front-rear direction of the vehicle body frame (21);
a linkage mechanism (5) supported by a front portion of the vehicle body frame (21) and configured to allow the vehicle body frame (21) to lean leftward or rightward in the left-right direction of the vehicle body frame (21);
a left foot step (811) including a left-foot-placing face (811a) on which a left foot of a driver is to be placed, at least a part of the left foot step (811) being located rearward of the left front wheel (31);
a right foot step (821) including a right-foot-placing face (821a) on which a right foot of the driver is to be placed, at least a part of the right foot step (821) being located rearward of the right front wheel (32); and
a load transfer mechanism (8) capable of transferring a load to a left portion of the linkage mechanism (5) through the left-foot-placing part (811) and transferring a load to a right portion of the linkage mechanism (5) through the right-foot-placing part (821), or capable of transferring a load to the left portion of the linkage mechanism (5) through the right-foot-placing part (821) and transferring a load to the right portion of the linkage mechanism (5) through the left-foot-placing part (811), and
the load transfer mechanism (8) includes a left-foot- load-transfer part (81), a right-foot-load-transfer part (82), and a left-right-coupling member (83);
**characterised in that**
the leaning vehicle (1) further comprises rear equipment (100) which is supported by a rear portion of the vehicle body frame (21) and does not include a rear fender (42) covering at least a part of an upper portion of the rear wheel (4),
wherein the rear equipment (100) is
located such that a first distance (L2) in a front-rear direction from a rear end of the left foot step (811) to a front end of the rear equipment (100) is greater than a half (L1) of a length of the left foot step (811) in the front-rear direction, and a second distance (L4) in the front-rear direction from a rear end of the right foot step (821) to the front end of the rear equipment (100) is greater than a half (L3) of a length of the right foot step (821) in the front-rear direction,
located such that a first height (H1) of an upper end of the rear equipment (100) in a top-bottom direction from the left-foot-placing face (811a) of the left foot step (811) is less than a second height (H2) of the left-foot-placing face (811a) of the left foot step (811) in the top-bottom direction from a ground surface, and a third height (H3) of the upper end of the rear equipment (100) in the top-bottom direction from the right-foot-placing-face of the right foot step (821) is less than a fourth height (H4) of the right-foot-placing face (821a) of the right foot step (821) in the top-bottom direction from the ground surface, and
located between a first center in a left-right direction of the left foot step (811) and a second center in the left-right direction of the right foot step (821) when the leaning vehicle (1) is seen from rear.

2. The leaning vehicle according to claim 1, further comprising
a rear-member-supporting part (40) supporting at least one of the rear fender (42) or the rear equipment (100) to the vehicle body frame (21).

3. The leaning vehicle (1) according to claim 2, wherein
the upper end of the rear equipment (100) is lower than an upper end of the rear fender (42).

4. The leaning vehicle (1) according to any one of claims 1 to 3, wherein
the rear equipment (100) includes at least one of a license-plate-supporting bracket (102) supporting a license plate, a reflector (101) or a lighting device (103).

## Patentansprüche

1. Ein Neigungsfahrzeug (1), das dazu konfiguriert ist, sich beim Linksabbiegen nach links zu neigen und beim Rechtsabbiegen nach rechts zu neigen, wobei dasselbe folgende Merkmale aufweist:
einen Fahrzeugkarosserierahmen (21);
ein linkes Vorderrad (31), das sich in einer Links-Rechts-Richtung des Fahrzeugkarosserierahmens (21) auf der linken Seite des Fahrzeugkarosserierahmens (21) befindet;
ein rechtes Vorderrad (32), das sich in der Links-Rechts-Richtung des Fahrzeugkarosserierahmens (21) auf der rechten Seite des Fahrzeugkarosserierahmens (21) befindet;
ein Hinterrad (4), das sich zwischen dem linken Vorderrad (31) und dem rechten Vorderrad (32) befindet, wenn der Fahrzeugkarosserierahmen (21) in einer Vorne-Hinten-Richtung betrachtet wird, und sich in der Vorne-Hinten-Richtung des Fahrzeugkarosserierahmens (21) weiter hinten als das linke Vorderrad (31) und das rechte Vorderrad (32) befindet;
einen Verknüpfungsmechanismus (5), der von einem Vorderabschnitt des Fahrzeugkarosserierahmens (21) gestützt wird und dazu konfiguriert ist, dem Fahrzeugkarosserierahmen (21) zu ermöglichen, sich in der Links-Rechts-Richtung des Fahrzeugkarosserierahmens (21) nach links oder rechts zu neigen;
eine linke Trittstufe (811) einschließlich einer Linker-Fuß-Platzierungsfläche (811a), auf der ein linker Fuß eines Fahrers zu platzieren ist, wobei sich zumindest ein Teil der linken Trittstufe (811) hinter dem linken Vorderrad (31) befindet;
eine rechte Trittstufe (821) einschließlich einer Rechter-Fuß-Platzierungsfläche (821a), auf der ein rechter Fuß des Fahrers zu platzieren ist, wobei sich zumindest ein Teil der rechten Trittstufe (821) hinter dem rechten Vorderrad (32) befindet; und
einen Lastübertragungsmechanismus (8), der eine Last durch den Linker-Fuß-Platzierungsteil (811) auf einen linken Abschnitt des Verknüpfungsmechanismus (5) übertragen kann und eine Last durch den Rechter-Fuß-Platzierungsteil (821) auf einen rechten Abschnitt des Verknüpfungsmechanismus (5) übertragen kann, oder der eine Last durch den Rechter-Fuß-Platzierungsteil (821) auf den linken Abschnitt des Verknüpfungsmechanismus (5) übertragen kann und eine Last durch den Linker-Fuß-Platzierungsteil (811) auf den rechten Abschnitt des Verknüpfungsmechanismus (5) übertragen kann, und der Lastübertragungsmechanismus (8) umfasst einen Linker-Fuß-Lastübertragungsteil (81), einen Rechter-Fuß-Lastübertragungsteil (82) und ein Links-Rechts-Kopplungsbauglied (83);
**dadurch gekennzeichnet, dass** das Neigungsfahrzeug (1) ferner eine hintere Ausrüstung (100) aufweist, die von einem hinteren Abschnitt des Fahrzeugkarosserierahmens (21) gestützt wird und keinen hinteren Kotflügel (42) umfasst, der zumindest einen Teil eines oberen Abschnitts des Hinterrads (4) abdeckt,
wobei die hintere Ausrüstung (100)
derart angeordnet ist, dass ein erster Abstand (L2) in einer Vorne-Hinten-Richtung von einem hinteren Ende der linken Trittstufe (811) zu einem vorderen Ende der hinteren Ausrüstung (100) größer ist als eine Hälfte (L1) einer Länge der linken Trittstufe (811) in der Vorne-Hinten-Richtung, und ein zweiter Abstand (L4) in der Vorne-Hinten-Richtung von einem hinteren Ende der rechten Trittstufe (821) zu dem vorderen Ende der hinteren Ausrüstung (100) größer ist als eine Hälfte (L3) einer Länge der rechten Trittstufe (821) in der Vorne-Hinten-Richtung,
derart angeordnet ist, dass eine erste Höhe (H1) eines oberen Endes der hinteren Ausrüstung (100) in einer Oben-Unten-Richtung von der Linker-Fuß-Platzierungsfläche (811a) der linken Trittstufe (811) kleiner ist als eine zweite Höhe (H2) der Linker-Fuß-Platzierungsfläche (811a) der linken Trittstufe (811) in der Oben-Unten-Richtung von einer Grundfläche aus, und eine dritte Höhe (H3) des oberen Endes der hinteren Ausrüstung (100) in der Oben-Unten-Richtung von der Rechter-Fuß-Platzierungsfläche der rechten Trittstufe (821) kleiner ist als eine vierte Höhe (H4) der Rechter-Fuß-Platzierungsfläche (821a) der rechten Trittstufe (821) in der Oben-Unten-Richtung von der Grundfläche aus, und
zwischen einer ersten Mitte in einer Links-Rechts-Richtung der linken Trittstufe (811) und einer zweiten Mitte in der Links-Rechts-Richtung der rechten Trittstufe (821) angeordnet ist, wenn das Neigungsfahrzeug (1) von hinten betrachtet wird.

2. Das Neigungsfahrzeug gemäß Anspruch 1, das ferner folgende Merkmale aufweist
ein Rückseitenbaugliedstützteil (40), das zumindest eines von dem hinteren Kotflügel (42) oder der hinteren Ausrüstung (100) an dem Fahrzeugkarosserierahmen (21) stützt.

3. Das Neigungsfahrzeug (1) gemäß Anspruch 2, bei dem
das obere Ende der hinteren Ausrüstung (100) niedriger liegt als ein oberes Ende des hinteren Kotflügels (42).

4. Das Neigungsfahrzeug (1) gemäß einem der Ansprüche 1 bis 3, bei dem
die hintere Ausrüstung (100) zumindest eines von einer Kennzeichen-Halterung (102), die ein Kennzeichen hält, einem Reflektor (101) oder einer Beleuchtungsvorrichtung (103) umfasst.

## Revendications

1. Véhicule à inclinaison (1) configuré pour s'incliner vers la gauche lors d'un virage à gauche et pour s'incliner vers la droite lors d'un virage à droite, comprenant:
un châssis de carrosserie de véhicule (21);
une roue avant gauche (31) située à gauche du châssis de carrosserie de véhicule (21) dans une direction gauche-droite du châssis de carrosserie de véhicule (21);
une roue avant droite (32) située à droite du châssis de carrosserie de véhicule (21) dans la direction gauche-droite du châssis de carrosserie de véhicule (21);
une roue arrière (4) située entre la roue avant gauche (31) et la roue avant droite (32) lorsque le châssis de carrosserie de véhicule (21) est vu dans une direction avant-arrière, et située plus en arrière que la roue avant gauche (31) et la roue avant droite (32) dans la direction avant-arrière du châssis de carrosserie de véhicule (21);
un mécanisme de liaison (5) supporté par une partie avant du châssis de carrosserie de véhicule (21) et configuré pour permettre au châssis de carrosserie de véhicule (21) de s'incliner vers la gauche ou vers la droite dans la direction gauche-droite du châssis de carrosserie de véhicule (21);
un marchepied gauche (811) comportant une face de placement de pied gauche (811a) sur laquelle doit être placé un pied gauche d'un conducteur, au moins une partie du marchepied gauche (811) étant située à l'arrière de la roue avant gauche (31);
un marchepied droit (821) comportant une face de placement de pied droit (821a) sur laquelle doit être placé un pied droit du conducteur, au moins une partie du marchepied droit (821) étant située à l'arrière de la roue avant droite (32); et
un mécanisme de transfert de charge (8) à même de transférer une charge à une partie gauche du mécanisme de liaison (5) par l'intermédiaire de la partie de placement de pied gauche (811) et de transférer une charge à une partie droite du mécanisme de liaison (5) par l'intermédiaire de la partie de placement de pied droit (821), ou à même de transférer une charge à la partie gauche du mécanisme de liaison (5) par l'intermédiaire de la partie de placement de pied droit (821) et de transférer une charge à la partie droite du mécanisme de liaison (5) par l'intermédiaire de la partie de placement de pied gauche (811), et
le mécanisme de transfert de charge (8) comporte une partie de transfert de charge de pied gauche (81), une partie de transfert de charge de pied droit (82), et un élément de couplage gauche-droite (83);
**caractérisé par le fait que** le véhicule à inclinaison (1) comprend par ailleurs un équipement arrière (100) qui est supporté par une partie arrière du châssis de carrosserie de véhicule (21) et ne comporte pas de garde-boue arrière (42) recouvrant au moins une partie d'une partie supérieure de la roue arrière (4),
dans lequel l'équipement arrière (100) est
situé de sorte qu'une première distance (L2) dans une direction avant-arrière d'une extrémité arrière du marchepied gauche (811) à une extrémité avant de l'équipement arrière (100) soit supérieure à la moitié (L1) d'une longueur du marchepied gauche (811) dans la direction avant-arrière, et qu'une deuxième distance (L4) dans la direction avant-arrière d'une extrémité arrière du marchepied droit (821) à l'extrémité avant de l'équipement arrière (100) soit supérieure à la moitié (L3) d'une longueur du marchepied droit (821) dans la direction avant-arrière,
situé de sorte qu'une première hauteur (H1) d'une extrémité supérieure de l'équipement arrière (100) dans une direction de haut en bas à partir de la face de placement de pied gauche (811a) du marchepied gauche (811) soit inférieure à une deuxième hauteur (H2) de la face de placement de pied gauche (811a) du marchepied gauche (811) dans la direction de haut en bas à partir d'une surface de sol, et qu'une troisième hauteur (H3) de l'extrémité supérieure de l'équipement arrière (100) dans la direction de haut en bas à partir de la face de placement de pied droit du marchepied droit (821) soit inférieure à une quatrième hauteur (H4) de la face de placement de pied droit (821a) du marchepied droit (821) dans la direction de haut en bas à partir de la surface de sol, et
situé entre un premier centre dans une direction gauche-droite du marchepied gauche (811) et un deuxième centre dans la direction gauche-droite du marchepied droit (821) lorsque le véhicule à inclinaison (1) est vu depuis l'arrière.

2. Véhicule à inclinaison selon la revendication 1, comprenant par ailleurs
une partie de support d'élément arrière (40) supportant au moins l'un parmi le garde-boue arrière (42) ou l'équipement arrière (100) sur le châssis de carrosserie de véhicule (21).

3. Véhicule à inclinaison (1) selon la revendication 2, dans lequel
l'extrémité supérieure de l'équipement arrière (100) est inférieure à une extrémité supérieure du garde-boue arrière (42).

4. Véhicule à inclinaison (1) selon l'une quelconque des revendications 1 à 3, dans lequel
l'équipement arrière (100) comporte au moins l'un parmi un support de plaque d'immatriculation (102) supportant une plaque d'immatriculation, un réflecteur (101) ou un dispositif d'éclairage (103).
